# EUROPEAN PATENT APPLICATION

(11) **EP 1 860 491 A1**
(43) Date of publication of application: **28.11.2007**
(21) Application number: 06729355.5
(22) Date of filing: 17.03.2006
(51) Int. Cl.: G02F 1/37

(54) **METHOD FOR MANUFACTURING A PERIODICALLY-POLED STRUCTURE**

(30) Priority: 18.03.2005 JP 2005080338
(71) Applicant: NIPPON TELEGRAPH AND TELEPHONE CORPORATION, Tokyo 100-8116 (JP); NTT ELECTRONICS CORPORATION, Shibuya-ku, Tokyo 150-0043 (JP)
(72) Inventor: SUZUKI, Hiroyuki, -cho 3-Chome, Musashino-shi, Tokyo, 1808 (JP); ASOBE, Masaki, -cho 3-Chome, Musashino-shi, Tokyo, 1808 (JP); UMEKI, Takeshi, -cho 3-Chome, Musashino-shi, Tokyo, 1808 (JP); NISHIDA, Yoshiki, -cho 3-Chome, Musashino-shi, Tokyo, 1808 (JP); TADANAGA, Osamu, -cho 3-Chome, Musashino-shi, Tokyo, 1808 (JP); YANAGAWA, Tsutomu, -cho 3-Chome, Musashino-shi, Tokyo, 1808 (JP); MAGARI, Katsuaki, -cho 3-Chome, Musashino-shi, Tokyo, 1808 (JP); MAWATARI, Hiroyasu, -cho 3-Chome, Musashino-shi, Tokyo, 1808 (JP); MIYAZAWA, Hiroshi, -chome, Shibuya-ku, Tokyo, 1500043 (JP); YUMOTO, Junji, -chome, Shibuya-ku, Tokyo, 1500043 (JP)
(74) Representative: TBK-Patent
(86) International application number: PCT/JP2006/305365
(87) International publication number: WO 2006/101034

(57) **Abstract**

The present invention provides a periodically-poled structure with high conversion efficiency and improved manufacturing yield. The method for manufacturing a periodically-poled structure in a second order nonlinear optical crystal having a single domain structure (31) includes the steps of forming a resist pattern (32) which matches a polarization-inverted period on a -Z surface of the second order nonlinear optical crystal (31), and applying voltage to the -Z surface as a negative voltage where the resist pattern (32) is formed, and a +Z surface as a positive voltage so as to apply an electric field in the second order nonlinear optical crystal (31), wherein the second order nonlinear optical crystal (31) contains at least one element as a dopant which compensate for the crystal defects.

## Description

### Technical Field

The present invention relates to a method for manufacturing a periodically-poled structure, and more specifically to a method for manufacturing the periodically-poled structure in a second order nonlinear optical crystal used for a quasi phase matching type wavelength conversion device whose practical use as a visible laser or a mid-infrared light laser is expected.

### Background Art

Conventionally, a device applying a semiconductor optical amplifier and a device utilizing four-wave mixing are known as wavelength conversion devices for converting wavelength. However, these wavelength conversion devices cannot satisfy the conditions such as high efficiency, high speed, broadband, low noise, and polarization insensitive, that are required in a system.

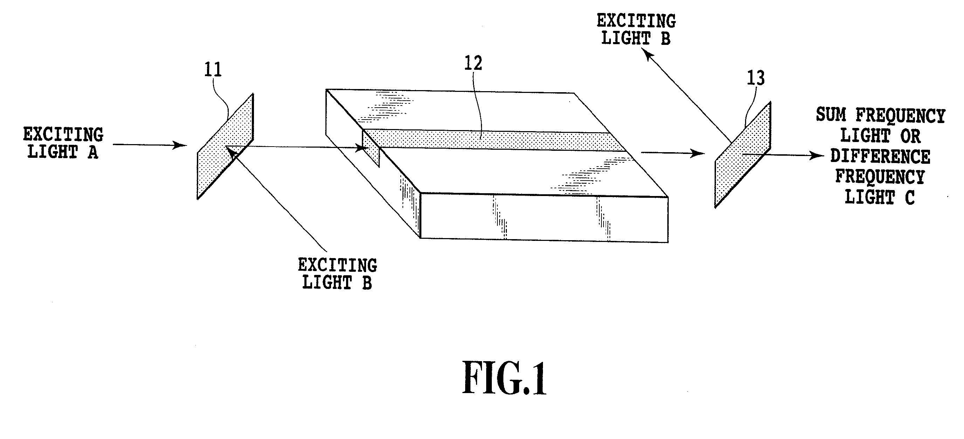

Meanwhile, applications of wavelength conversion device using second-order harmonic generation, sum frequency generation, and difference frequency generation generated by quasi phase matching which is a type of the second order nonlinear optical effect are expected. Fig. 1 shows a configuration of conventional quasi phase matching type wavelength conversion device. The wavelength conversion device includes a beam combiner 11 for combining light A having relatively small light intensity and light B having relatively large light intensity, a waveguide 12 composed of nonlinear optical crystal having periodically-poled structure, and a beam splitter 13 for separating sum frequency light or difference frequency light C and the light B. The light A is converted into the sum frequency light or the difference frequency light C having different wavelength, and emitted with the light B. If the light A and the light B have the same wavelength, or if only the light A is inputted to thereon, then the second harmonic having a frequency twice the light by the second-order harmonic generation can be emitted from the waveguide 12.

For example, when the light B has a wavelength of λ2 = 1300 nm, the light A of wavelength λ1 = 980 nm is converted into the sum frequency C which is a yellow visible light of wavelength λ3 = 560 nm. A visible light source utilizing these wavelength conversion devices may be used for a light source to excite fluorescent protein used as a gene identification pigment. Therefore, the visible light source has a significant effect on increasing the sensitivity of a biological observation device.

For example, when the wavelength of the light A and B is λ1 = λ2 = 976 nm, or only the wavelength λ1 = 976 nm is inputted for the light A, then a visible light of wavelength λ3 = 488nm can be obtained by the second-order harmonic generation. This wavelength is the main lasing wavelength of conventionally used Argon ion lasers. A visible laser light source applying the above wavelength conversion device has a significant effect in miniaturization and in reducing power consumption of analysis equipments such as a laser fluorescent microscope, a DNA sequencer, and a flow cytometer.

When the light B has a wavelength of λ2 = 1560 nm, the light A of wavelength λ1 = 1060 nm is converted into the difference frequency light C which is a mid-infrared light of wavelength λ3 = 3.3 µm. The mid-infrared light source utilizing these wavelength conversion devices can detect fundamental vibration absorption lines of hydrocarbon gas such as methane and ethane. Therefore, the mid-infrared light source has a significant effect on increasing the sensitivity of gas sensing devices for industry, medical, and environment measuring.

In addition, when the light B has a wavelength of λ2 = 1550 nm, the light A of wavelength λ1 = 976 nm is converted into the difference frequency light C which is a mid-infrared light of wavelength λ3 = 2.7 µm. The mid-infrared light source utilizing these wavelength conversion devices can detect strong absorption lines of water vapor and NO gas. Therefore, the mid-infrared light source has a significant effect on increasing the sensitivity of gas sensing devices such as an industrial application of trace amount moisture detection in a semiconductor process and a medical application for exhaled breath analysis.

Furthermore, when the light B has a wavelength of λ2 = 1580 nm, the light A of wavelength λ1 = 940 nm is converted into the difference frequency light C which is a mid-infrared light of wavelength λ3 = 2.3 µm. The mid-infrared light source utilizing these wavelength conversion devices can detect strong absorption lines of carbon monoxide. Therefore, the mid-infrared light source has a significant effect on increasing the sensitivity of gas sensing devices such as an industrial application of combustion control in an incinerator and a medical application for exhaled breath analysis.

In order to manufacture these quasi phase matching type wavelength conversion device, the periodically-poled structure whose polarizing direction is periodically inverted should be manufactured on the second order nonlinear optical crystal. The following are known as a first method for manufacturing the periodically-poled structure (See Nonpatent Document 1, for example). The wavelength conversion device uses an MgO doped lithium niobate (MgO - LiNbO₃) substrate with thickness of 500 µm, which is a nonlinear ferroelectric optical material having a single domain structure. A first electrode having an electrode pattern manufactured at the required widths and intervals corresponding to the aimed domain-inverted pattern is arranged on the +Z surface of this substrate. A second electrode is arranged on the -Z surface of the substrate. Accordingly, a positive voltage is applied to the first electrode and a negative voltage is applied to the second electrode through liquid electrodes respectively. After the applied voltage is stopped, a domain-inverted structure having a periodical domain-inverted pattern of the corresponding electrode pattern is retained.

In addition, the following are known as a second method for manufacturing the periodically-poled structure (See Nonpatent Document 2, for example). The wavelength conversion device uses a lithium niobate (LiNbO₃, hereinafter abbreviated as LN) substrate with thickness of 200 µm or less which is the nonlinear ferroelectric optical material having a single domain structure. The first electrode having an electrode pattern manufactured at the required widths and intervals corresponding to the aimed domain-inverted pattern is arranged on the -Z surface of the substrate. A second electrode is arranged on the +Z surface of the substrate. Accordingly, a negative voltage is applied to the first electrode and a positive voltage is applied to the second electrode by through liquid electrodes respectively. After the applied voltage is stopped, the domain-inverted structure having the periodical domain-inverted pattern of the corresponding electrode patter is retained.

However, the above-mentioned first method for manufacturing the periodically-poled structure is more likely to generate unexpected domain-inverted part on the +Z surface rather than on the -Z surface, where the periodical domain-inverted pattern is formed during the manufacturing step. When applying resist on the MgO-LN substrate, the use of polar solvent causes a problem of a resist pattern extending around a domain boundary due to the difference in the polarity between the domains. The size of the inverted domain cannot be disregarded in comparison with the size of the resist pattern, and a disturbance of the resist pattern becomes equivalent to a disturbance of the polarization inverted pattern. As a result, the wavelength conversion device has a problem of the reduction in conversion efficiency reduction.

In addition, the above-mentioned second method for manufacturing the periodically-poled structure requires the crystal thickness to be restricted to 200 µm or less so as to avoid a dielectric breakdown of the second order nonlinear optical crystal by the applied voltage. Consequently, a strong pyroelectric effect generated during a temperature raising or lowering step of an electrode pattern manufacturing process for the second order nonlinear optical crystal in the single domain structure causes damage to the crystal itself. This causes a problem that manufacturing yield in the wavelength conversion device cannot be improved.

The object of the present invention is to provide a method for manufacturing the periodically-poled structure with a high efficiency and an improved manufacturing yield.

Nonpatent Document 1: M. Nakamura et al., "Quasi-Phase-Matched Optical Parametric Oscillator Using Periodically Poled MgO-Doped LiNbO3 Crystal", Jpn. J. Appl. Phys., Vol.38, Part2, No.11A, pp.L1234-L1236 (1999) Nonpatent Document 2: J. Webjoern et al., "Quasi-phase-matched blue light generation in bulk lithium niobate, electrically poled via periodic liquid electrodes", Electronics Letters, Vol.30, No.11, p.894-895 (1994)

### DISCLOSURE OF THE INVENTION

In order to attain the above object, an embodiment for manufacturing a periodically-poled structure in a single domain second order nonlinear optical crystal includes the steps of forming a resist pattern which matches a polarization-inverted period on a -Z surface of the second order nonlinear optical crystal, and applying voltage to the -Z surface as a negative voltage where the resist pattern is formed, and the +Z surface as a positive voltage, so as to apply an electric field in a second order nonlinear optical crystal. The second order nonlinear optical crystal herein contains at least one element as a dopant which compensate for the crystal defects.

The elements which compensate defect in second order nonlinear optical crystal defect can be at least one of Mg, Zn, Sc, and In. The second order nonlinear optical crystal may be at least one of LiNbO₃ , LiTaO₃, and LiNbₓTa₁₋ₓO₃ (0≦x≦1). The substrate thickness of the second order nonlinear optical crystal is preferably 200 µm or more and not exceeding 8 mm.

In addition, the step of applying voltage is preferably performed in a condition of the second order nonlinear optical crystal being heated to 50 °C or higher and 150 °C or lower.

### BRIEF DESCRIPTION OF THE DRAWINGS

Fig. 1 shows a configuration of a conventional quasi phase matching type wavelength conversion device;
Fig. 2 shows a second order nonlinear optical crystal substrate where the unexpected domain-inverted patterns are generated;
Fig. 3A shows a relation between a breakdown voltage and a polarization-inversion voltage of lithium niobate;
Fig. 3B shows a relation between a breakdown voltage and a polarization-inversion voltage of lithium niobate;
Fig. 4A shows a method for manufacturing a periodically-poled structure according to an embodiment of the present invention;
Fig. 4B shows a method for manufacturing a periodically-poled structure according to an embodiment of the present invention;
Fig. 5 shows a method for manufacturing a periodically-poled structure according to Example 1; and
Fig. 6 shows a method for manufacturing a periodically-poled structure according to Example 2.

### BEST MODE FOR CARRYING OUT THE INVENTION

The embodiment of the present invention will be described in detail with reference to the drawings. In order to realize high efficiency quasi phase matching wavelength conversion device with a high yield, disturbance should be avoided in the periodically-poled pattern, and should be kept from crystal damage during the manufacturing step. Consequently, the second order nonlinear optical crystal in a single domain structure containing at least one element of Mg, Zn, Sc, and In as a dopant is used. The dopant compensates for the second order nonlinear optical crystal defect. A resist pattern which matches the polarization-inverted period is formed on the -Z surface of this substrate. The -Z surface as a negative voltage, where the resist pattern is formed, and the +Z surface as a positive voltage is applied so as to apply an electric field in the second order nonlinear optical crystal.

An MgO - LN crystal, which is a typical second order nonlinear optical crystal, is generally manufactured by using a crystal-growth method such as the Czochralski method. The as-grown crystal (boule) has in a multi-domain structure where the direction of the spontaneous polarization is random. In order to pole this crystal in a single domain structure, a voltage should be applied to have an electric field applied between the both Z surfaces in the condition of the crystal being heated up to the temperature near the Curie point. This single domain forming step to direct the spontaneous polarization to one direction is so-called poling operation.

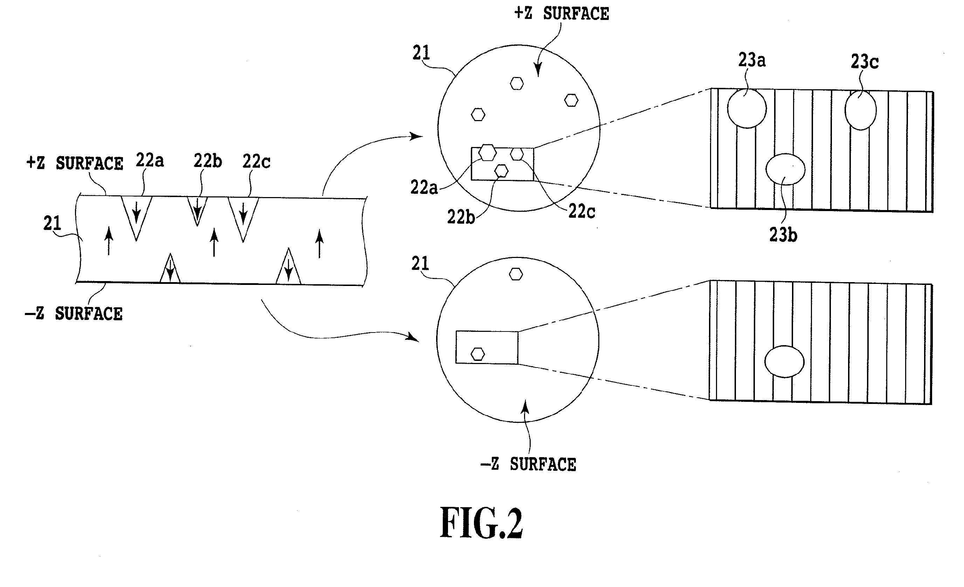

Fig. 2 shows a second order nonlinear optical crystal substrate where the unexpected domain-inverted patterns are generated. The positive region of the substrate 21 in a polarization direction is called the +Z surface, and the negative region thereof is called the -Z surface. As shown in the figure, unexpected domain-inverted parts 22a to 22c are more likely to be generated on the +Z surface during the manufacturing step rather than on the -Z surface. Therefore, the difference in the polarity between the domains generates extensions of resist patterns 23a to 23c on the surface where the resist dissolved in the polar solvent is coated. According to the method of the embodiment, a resist pattern which matches the polarization-inverted period is formed on the -Z surface having less generation of the unexpected domain-inverted part. Thus, the disturbance of the periodically-poled pattern due to the unexpected domain-inverted pattern can be prevented to avoid reduction of conversion efficiency.

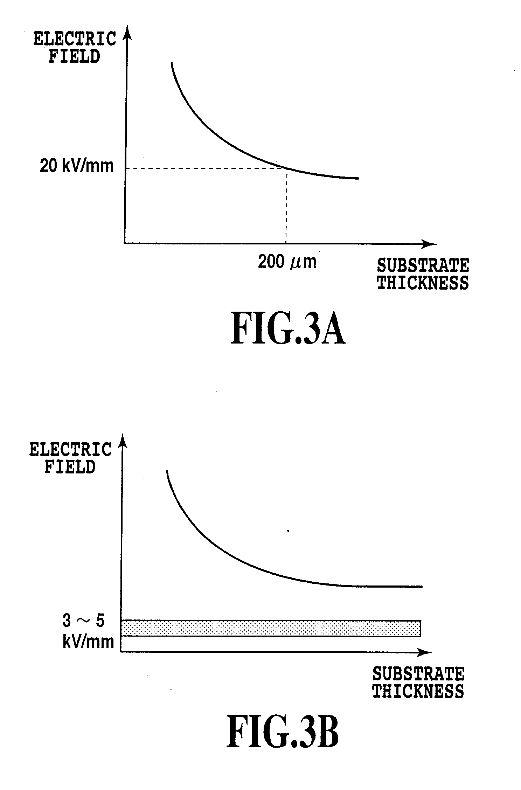

Figs. 3A and 3B show the relation between breakdown voltage and polarization-inversion voltage of lithium niobate. Fig. 3A shows a relation between substrate thickness of non-doped LN substrate and breakdown voltage. The non-doped LN substrate requires an electric field of 20kV/mm for the polarization-inversion, and thus the substrate thickness should be restricted to 200 µm or less. Meanwhile, doping at least one element of Mg, Zn, Sc, and In into the LN substrate reduces an electric field for the polarization-inversion down to 3 to 5 kV/mm. The substrate thickness is no longer restricted in the relation with the breakdown voltage, as shown in Fig. 3B.

Consequently, the use of the second order nonlinear optical crystal having a single domain structure containing at least one element of Mg, Zn, Sc, and In, allows the use of the second order nonlinear optical crystal with a thickness of 200 µm or more and not exceeding 8 mm. Accordingly, the crystal substrate itself is prevented from being damaged in the temperature raising or lowering step during the process of forming resist pattern using photolithography, and the manufacturing yield of the wavelength conversion device is improved.

The above will be described in more detail below. The process for manufacturing the polarization-inverted structure includes such as a resist step of forming a patterned resist film (insulating film), and a baking step of solidifying the resist coated on the substrate by heating. A surface charge is always generated through these steps due to the pyroelectricity of LN. When using a single domain LN substrate, polarities of generated surface charge are in one direction. Thus, high electric field is applied to both front and rear surface of the LN substrate as a whole. As a result, the substrate end surface is chipped by electric discharge generated therein and cause a crack in the LN substrate itself from the chipped surface. The manufacturing yield of the wavelength conversion device is reduced. This phenomenon is prominent particularly with a thin LN substrate.

Conventionally, to prevent from these defects, measures are provided by slowly raising/lowering temperature and by adding the step of neutralizing the surface charge. As a result, however, this takes time and the process becomes complicated. Nevertheless, thickening of the LN substrate can prevent the LN substrate from causing cracks by effect of electric discharge and thus the yield is increased substantially. The neutralizing step of the surface charge can be eliminated, or the time for the neutralizing step can be shortened. In addition, the process can be substantially facilitated by raising/lowering the temperature rapidly.

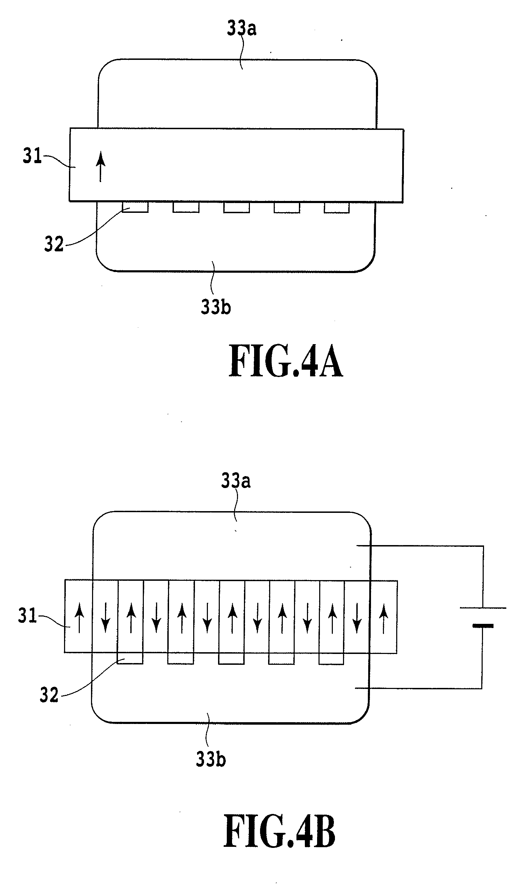

Figs. 4A and 4B show the method for manufacturing the periodically-poled structure according to the embodiment of the present invention. A resist pattern 32 which matches the polarization-inverted period is formed on the -Z surface of the second order nonlinear optical crystal 31 in a single domain structure containing at least one of Mg, Zn, Sc, and In as a dopant. Liquid electrodes 33a and 33b are connected to the +Z surface and the -Z surface respectively (Fig. 4A). Conductive gel may also be used instead of the liquid electrodes. The -Z surface as a negative voltage, where the resist pattern is formed, and the +Z surface as a positive voltage is applied so as to apply an electric field in the second order nonlinear optical crystal. When an electric field higher than the coercive electric field of the second order nonlinear optical crystal is applied between the both Z surfaces, negative voltage is applied to the crystal surface of the -Z surface and the polarization-inverted structure which matches the resist pattern can be manufactured (Fig. 4B).

The resist pattern 32 described herein is used as an insulating film. That is a voltage at a coercive electric field or higher is applied to the contacted part of the liquid electrode 33b with the second order nonlinear optical crystal 31, and thereby the direction of the spontaneous polarization is inverted. Meanwhile, the part where the resist pattern 32 is formed is insulated electrically so that the spontaneous polarization is not inverted. Accordingly, the periodically-poled structure which matches the resist pattern 32 can be manufactured.

The coercive electric field is a voltage necessary for aligning the spontaneous polarization of a ferroelectric crystal in one direction. A typical second order nonlinear optical crystal such as a non-doped LN and lithium tantalite (LiTaO₃, hereinafter abbreviated as LT), or a mixed composition crystal (hereinafter referred to as LNT) represented by LiNbₓTa₁₋ₓO₃ (0≦x≦1) requires high voltage of 22 kV/mm at room temperature. However, the value of the coercive electric field may be reduced by doping the elements such as Mg, Zn, Sc, and In in the crystal, while coercive electric field of 6 kV/mm or below may be obtained in LN or LT where Mg5mol% or Zn5mol% are doped.

The thickness of the second order nonlinear optical crystal in the present embodiment is 200 µm or more and does not exceed 8 mm. The thickness below 200 µm leads to a significant warp in the substrate itself and becomes difficult to execute the photolithography for forming a resist pattern. The thickness exceeding 8mm necessarily increases the weight of the crystal substrate and makes its handling difficult. In addition, an increase in the inversion voltage required for the polarization-inversion enlarges the power source for generating high voltage.

The step of the present embodiment can be also performed in the heating condition of the second order nonlinear optical crystal. The heating reduces the coercive electric field in the second order nonlinear optical crystal and therefore has an advantage that the polarization-inversion of a thick crystal substrate can be performed with a low voltage. Furthermore, electric conductivity is increased so that the forming of the polarization-inverted structure is prevented from influence due to the crystal defects, and there is an advantage of being able to manufacture a uniform polarization-inverted structure. The heating temperature of 50 °C or higher and 150 °C or lower is required because the temperature higher than 150 °C result insignificant evaporation of liquid electrodes. Preferably, the heating is performed in the temperature range of 90 °C to 100 °C.

While the present invention will be described with reference to the examples, it is to be understood that the present invention is not limited to the following examples.

### Example 1

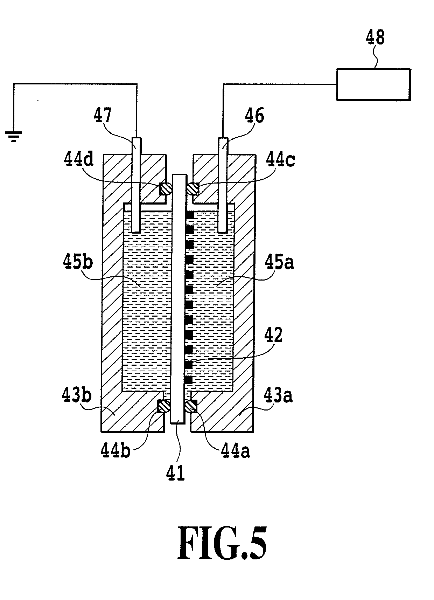

Fig. 5 shows a method for manufacturing a periodically-poled structure according to Example 1. Example 1 shows a 3-inch Zn doped LN substrate with a substrate thickness of 300 µm as a second order nonlinear optical crystal. A LN substrate 41 is maintained in a single domain structure, and a resist pattern 42 which matches the periodically-poled structure is formed on the -Z surface.

The resist pattern 42 is formed by using a typical photolithography process. An oleophilic treatment is performed on the surface of the LN substrate 41 after organic cleaning. Then, S1818 resist manufactured by Shipley Company L. L. C is dropped solvent onto the substrate to have spin-coated, and the spin-coated resist film is dried and solidified by baking in a constant temperature furnace. The heat during the baking or the subsequent cooling thereof does not damage the substrate. This is because the substrate thickness of 300 µm in the LN substrate 41 can prevent from substrate cracks under a pyroelectric effect. Then, the photomask which matches the periodically-poled structure is contacted to the resist film and ultraviolet light are irradiated and exposed thereto. Consequently, the resist pattern 42 which is developed to match the periodically-poled structure is formed by developing the resist film.

An acrylic container 43 has a structure for avoiding liquid leakage by holding the LN substrate 41 with an O-ring 44 when liquid is injected into the container. The container 43 is filled with lithium chloride aqueous solution 45. An electrode bar 46 loaded in the aqueous solution is coupled to a DC power source 48 which generates negative voltage, and the other electrode bar 47 is grounded. A voltage of 3kV is applied from the DC power source 48 for 300 milliseconds. At this time, a current charge equivalent to twice as much as the spontaneous polarization charge which matches the target inversion area of the resist pattern 42 flows from the DC power source, and the periodically-poled structure which matches the resist pattern 42 can be manufactured.

As shown in Fig. 4, the polarization-inverted structure which matches the resist pattern can be manufactured on the LN substrate 41. In addition, the similar polarization-inverted structure can also be manufactured by using a Zn doped LT substrate and a Zn doped LNT substrate as the second order nonlinear optical crystal. Although a mask of inversion period 9.1 µm is used in Example 1, the polarization-inverted structure can be manufactured in any inversion period above 2 µm.

A strip device is cut out from the manufactured LN substrate in a direction orthogonal to the periodically-poled structure to polish the both end surface of the cut out device. If light of wavelength 1300 nm and light of wavelength 1060 nm are coupled to this device in a direction orthogonal to the periodically-poled structure, then a yellow sum-frequency light of wavelength 589 nm can be generated.

### Example 2

In Example 2, the periodically-poled structure is manufactured on a 3-inch Zn doped LN substrate with a substrate thickness of 5mm, by using a method similar to that of Example 1. The resist pattern which matches the periodic polarization structure is formed in a similar way as described in Example 1, and forms a resist pattern with a period of 4.5 µm.

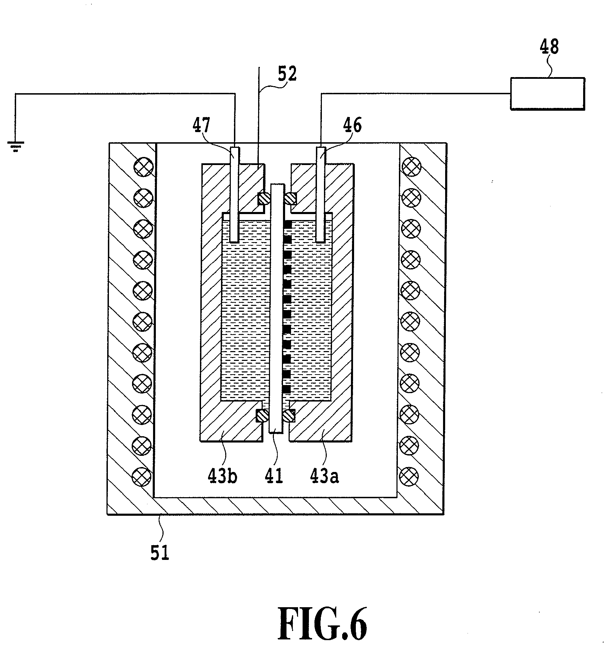

Fig. 6 shows a method for manufacturing the periodically-poled structure according to Example 2. In Example 2, the polarization-inverted structure is manufactured in a condition that LN substrate 41 is heated in the container 43 used in Example 1 in a mantle heater 51. The container 43 is manufactured by using a polycarbonate excellent in heat resistance. A thermocouple 52 is loaded in the container 43 to be heated to 90 °C in a state. The LN substrate 41 is prevented from being damaged during the heating. This is because the thickness of 5 mm in the LN substrate 41 provides high resistance to the pyroelectric effect.

A voltage of 15kV is applied for 300 milliseconds from the DC power source 48 connected to the electrode bar 46. At this time, a current equivalent to twice as high as the spontaneous polarization charge which matches the target inversion area of the resist pattern 42 flows from the DC power source, and the periodically-poled structure which matches the resist pattern 42 can be manufactured.

The reason that a voltage of 15kV is applied in Example 2 is because the electric field of Zn doped LN substrate at 90 °C is approximately 3kV/mm. Therefore, the substrate thickness of 5 mm requires a voltage of 15 kV. In addition, the similar polarization-inverted structure can also be manufactured by using the Zn doped LT substrate and the Zn doped LNT substrate as the second order nonlinear optical crystal.

A strip device is cut out from the manufactured LN substrate in a direction orthogonal to the periodically-poled structure to polish the both end surface of the cut out device. If light of wavelength 976 nm is coupled to this device in a direction orthogonal to the periodically-poled structure, then the second harmonic of wavelength 488 nm can be generated.

### Example 3

The periodically-poled structure is manufactured by using a 3-inch Zn doped LN substrate with a substrate thickness of 300 µm in a similar method as described in Example 1. The resist pattern which matches the periodically-poled structure is formed in a similar way as described in Example 1, and forms a resist pattern with a period of 28.5 µm. A strip device is cut out from the manufactured LN substrate in a direction orthogonal to the periodically-poled structure to polish the both end surface of the cut out device. If light of wavelength 1560 nm and light of wavelength 1060 nm are coupled to this device in a direction orthogonal to the periodically-poled structure, then a difference frequency light which is a mid-infrared light of wavelength 3.3 µm can be generated.

### Example 4

The periodically-poled structure is manufactured by using a 3-inch Zn doped LN substrate with a substrate thickness of 500 µm in a similar method as described in Example 1. The resist pattern which matches the periodic polarization structure is formed in a similar way as described in Example 1, and forms a resist pattern with a period of 26.3 µm. A strip device is cut out from the manufactured LN substrate in a direction orthogonal to the periodically-poled structure to polish the both end surface of the cut out device. If light of wavelength 1550 nm and light of wavelength 976 nm are coupled to this device in a direction orthogonal to the periodically-poled structure, then a difference frequency light which is a mid-infrared light of wavelength 2.7 µm can be generated.

### Example 5

The periodically-poled structure is manufactured by using a 3-inch Zn doped LN substrate with a substrate thickness of 400 µm in a similar method as described in Example 1. The resist pattern which matches the periodic polarization structure is formed in a similar way as described in Example 1, and forms a resist pattern with a period of 25.6 µm. A strip device is cut out from the manufactured LN substrate in a direction orthogonal to the periodically-poled structure to polish the both end surface of the cut out device. If light of wavelength 1580 nm and light of wavelength 940 nm are coupled to this device in a direction orthogonal to the periodically-poled structure, then a difference frequency light which is a mid-infrared light of wavelength 2.3 µm can be generated.

## Claims

1. A method for manufacturing a periodically-poled structure in a second order nonlinear optical crystal having a single domain structure, comprising the steps of:
forming a resist pattern which matches a polarization-inverted period on a -Z surface of the second order nonlinear optical crystal; and
applying voltage to the -Z surface as a negative voltage where the resist pattern is formed, and a +Z surface as a positive voltage so as to apply an electric field in the second order nonlinear optical crystal;
wherein the second order nonlinear optical crystal contains at least one element which compensate for the crystal defects as a dopant.

2. The method for manufacturing the periodically-poled structure according to Claim 1, wherein the elements which compensate for the second order nonlinear optical crystal defect is at least one of Mg, Zn, Sc, and In.

3. The method for manufacturing the periodically-poled structure according to Claim 1 or 2, wherein the second order nonlinear optical crystal consists of at least one of LiNbO₃, LiTaO₃, and LiNbₓTa₁₋ₓO₃ (0≦x≦1).

4. The method for manufacturing the periodically-poled structure according to Claim 1, 2, or 3, wherein the substrate thickness of the second order nonlinear optical crystal is 200 µm or more and not exceeding 8 mm.

5. The method for manufacturing the periodically-poled structure according to any one of Claim 1 to 4, wherein the step of applying voltage is performed in a condition of the second order nonlinear optical crystal being heated to 50 °C or higher and 150 °C or lower.
